# EUROPÄISCHE PATENTSCHRIFT

(11) **EP 0 402 910 B1**
(45) Veröffentlichungstag und Bekanntmachung des Hinweises auf die Patenterteilung: **23.11.1994**
(21) Anmeldenummer: 90111225.0
(22) Anmeldetag: 13.06.1990
(51) Int. Cl.: B29C 65/20

(54) **Schweissmaschine mit Schweissspiegel**
Welding apparatus with welding mirror
Dispositif de soudage pourvu d'un miroir de soudage

(30) Priorität: 16.06.1989 DE 3919800
(43) Veröffentlichungstag der Anmeldung: 19.12.1990
(73) Patentinhaber: BRANSON ULTRASCHALL Niederlassung der EMERSON TECHNOLOGIES GmbH & CO., D-63128 Dietzenbach (DE)
(72) Erfinder: Klos, Werner, D-6090 Rüsselsheim (DE)
(74) Vertreter: Hauck, Hans, Dipl.-Ing.

(56) Entgegenhaltungen:
- DE-A- 2 412 531
- DE-A- 2 734 911
- US-A- 3 454 741
- US-A- 3 883 369

## Beschreibung

Die Erfindung betrifft eine Schweißmaschine mit einem Schweißspiegel zum Aufheizen der miteinander zu verschweißenden Werkstücke gemäß dem Oberbegriff des Patentanspruchs 1.

Solche Schweißmaschinen sind bekannt. Die zu verschweißenden Bauteile aus Kunststoff werden einander zugekehrt an Platten befestigt, die mittels Führungsstangen und Antriebszylinder verschiebbar in einem Rahmengestell der Maschine angeordnet sind. Zwischen die Werkstücke wird ein beheizbarer Schweißspiegel eingefahren, der die Werkstücke erwärmt. Nach dem Entfernen des Schweißspiegels werden die Platten aufeinanderzu gefahren und die erhitzten Bauteile miteinander verschweißt. Je nach Verwendungszweck und Form der zu verschweißenden Teile ist der Aufbau solcher Schweißmaschinen sehr unterschiedlich. Das zur Unterbringung der Pressenplatten mit den Führungen und Antriebszylindern erforderliche Rahmengestell mit den zusätzlichen Einrichtungen für den Heizspiegel erweist sich für die Bedienung der Schweißmaschine als hinderlich und aufwendig, da die Zugänglichkeit zu dem Arbeitsraum zwischen den Platten durch die Holme des Rahmengestells sowie durch die Einrichtungen für den Heizspiegel behindert sind.

Zum Verschweißen von Kunststoffrohren ist es auch bekannt (DE-A-27 34 911), die Spannvorrichtungen für die Rohre am Schlitten zu befestigen, die an Säulen verschiebbar geführt sind. Außerhalb der Bewegungsbahn der beiden Schlitten ist eine Führungssäule befestigt, um die der Schweißspiegel drehbar gelagert ist.

Die der Erfindung zugrundeliegende Aufgabe besteht deshalb darin, die Schweißmaschine so auszubilden, daß ein kompaktes, vereinfachtes Rahmengestell mit bausteif geführten Pressenplatten sowie integrierter Schweißspiegelanordnung den unterschiedlichen Aufgaben, wie Zugänglichkeit für Bedienung, horizontale oder vertikale Ausführung sowie Überlappung des Schweißprozeßablaufes mit einem Grundaufbau gerecht wird.

Die genannte Aufgabe ist erfindungsgemäß durch die Merkmale des Patentanspruchs 1 gelöst. Vorteilhafte Weiterbildungen ergeben sich aus den Unteransprüchen.

Da erfindungsgemäß das übliche Rahmengestell mit seinen Holmen entfällt und die Pressenplatten vielmehr an den durchlaufenden Säulen verschiebbar sind, wobei eine Säule gleichzeitig auch als Drehachse für den Schweißspiegel dient, ergibt sich ein sehr einfacher Aufbau der Schweißmaschine. Der wesentliche Vorteil der Konstruktion liegt darin, daß der Raum zwischen den Pressenplatten von mehreren Seiten zugänglich ist, so daß die Maschine besser in den Arbeitsprozeß eingegliedert werden kann. Außerdem lassen sich die Säulen so anordnen, daß eine gewünschte Zugänglichkeit von mehreren Seiten erzielt wird. Ferner ist man frei in der Wahl, wie der Heizspiegel drehbar angeordnet wird. Die Schweißmaschine ermöglicht somit die wahlweise Zuordnung der Bedienerposition, sowie eine weitgehende Freiheit für die Drehbarkeit des Schweißspiegels und die wahlweise Zuordnung des Transfersystems für die anzuliefernden Bauteile und fertigen Produkte.

Ferner ergibt sich ein kompaktes Baukastenelement durch die Anordnung von zwei oder drei Säulen für die Aufnahme von zwei Pressenplatten und des um eine Säule schwenkbaren Heizspiegels. Dieses Baukastenelement kann je nach Anforderung vertikal oder horizontal angeordnet sein. Ferner läßt sich in dieser Bauweise auch eine Schweißmaschine mit doppelter Schweißstation zusammenstellen, bei der zur Abkürzung der Bearbeitungszeit der Schweißspiegel abwechselnd zwischen den beiden Stationen hin- und herbewegt wird, wobei abwechselnd in der einen Station die Aufheizung und gleichzeitig in der anderen Station die Verschweißung erfolgt.

Mehrere Ausführungsbeispiele der Erfindung sind nachstehend anhand der Zeichnung näher erläutert. Es zeigt:
Figur 1 eine Draufsicht auf eine Schweißmaschine mit drei Säulen,
Figur 2 eine Seitenansicht der in Figur 1 dargestellten Maschine,
Figuren 3 bis 5 Draufsichten auf jeweils eine Maschine mit zwei Säulen unterschiedlicher Anodnung,
Figur 6 eine Seitenansicht einer waagerecht angeordneten Schweißmaschine,
Figur 7 eine Draufsicht auf die in Figur 6 dargestellte Maschine,
Figur 8 eine Zwei-Stationen-Schweißmaschine,
Figuren 9 und 10 Ansichten der in Figur 8 dargestellten Maschine mit dem Schweißspiegel einman in der Station I und in der Station II.

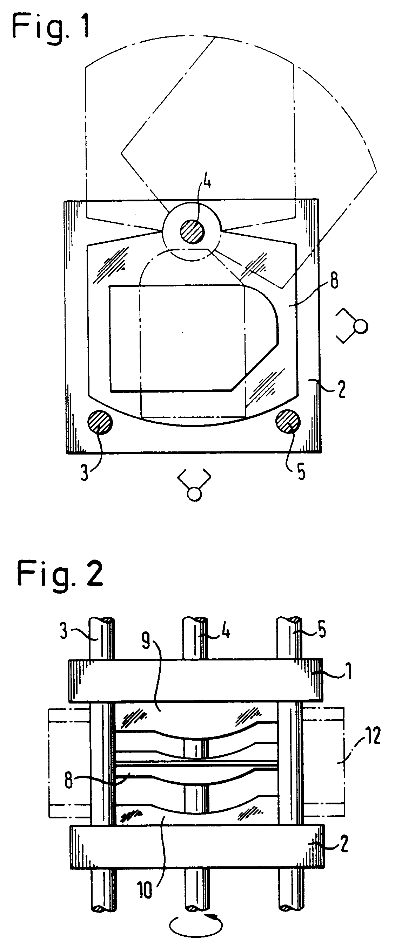

Eine erste Ausführungsform ist in den Figuren 1 und 2 dargestellt. Dabei sind zwei Pressenplatten 1 und 2 an drei Säulen 3, 4 und 5 verschiebbar angeordnet. Die Säulen 3, 4 und 5 sind ihrerseits vorzugsweise an ihren Enden gehäusefest gehalten. Beispielsweise können nicht dargestellte Endplatten, Joche oder Gehäuserahmen vorgesehen sein. Zusammen mit diesen nicht dargestellten Endstücken bilden die durchlaufenden Säulen 3, 4 und 5 das Schweißmaschinengestell, wobei die Säulen auch die Aufgabe übernehmen, die Platten 1 und 2 zu führen und wobei eine Säule, nämlich die Säule 4 und Schwenkachse für einen Schweißspiegel 8 bildet, der in der in Figur 1 dargestellten Weise ein- und ausschwenkbar ist. Wie aus Figur 1 hervorgeht, sind die Säulen 3 und 5 an benachbarten Ecken der Platten 1, 2 angeordnet, während die Säule 4 gegenüberliegend in der Mitte am Rande der Platten vorgesehen ist.

Die Platten 1 und 2 sind mit entsprechend den zu verschweißenden Bauteilen ausgebildeten Aufnahmen 9 und 10 versehen. Auch der Schweißspiegel 8 kann entsprechend ausgebildet sein. In der ausgeschwenkten Lage kann der Schweißspiegel 8 in einen Köcher 12 oder Handhabungsgerät für Beschikkung und Vorheizen der Schweißteile eintreten, der außerhalb der Platten 1, 2 hinter der Säule 4 angeordnet ist.

Durch diese Anordnung der Säulen in Verbindung mit den Platten und dem Schweißspiegel ist die Maschine von drei Seiten her zugänglich und der Schweißspiegel kann wahlweise in beiden Drehrichtungen ausgeschwenkt werden. In dieser Ausführungsform sind die Säulen senkrecht angeordnet, so daß sich eine stehende Bauweise ergibt. Die Säulen können aber auch waagerecht für eine liegende Anordnung der Schweißmaschine angeordnet werden.

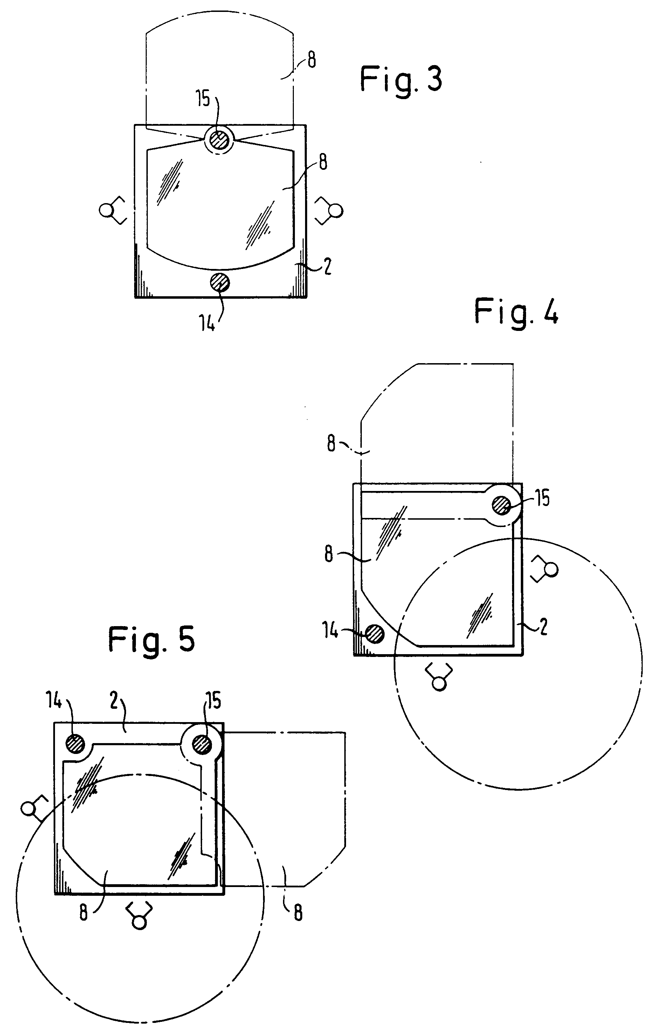

In den Figuren 3 bis 5 sind Schweißmaschinen mit zwei einander gegenüberliegenden Säulen vorgesehen, von denen eine auch die Drehachse für den Schweißspiegel bildet. In diesen Figuren sind die Säulen mit den Bezugszeichen 14, 15 versehen. Die Führung der Platten an nur zwei Säulen ist ausreichend, da die auf die Bauteile aufzubringenden Drücke beim Verschweißen verhältnismäßig gering sein können. Die Ausführungsformen zeigen die wahlweise Zuordnung der Bedienerposition entsprechend der gewählten Anordnung der Säulen 14, 15 und der Drehrichtung des Spiegels 8.

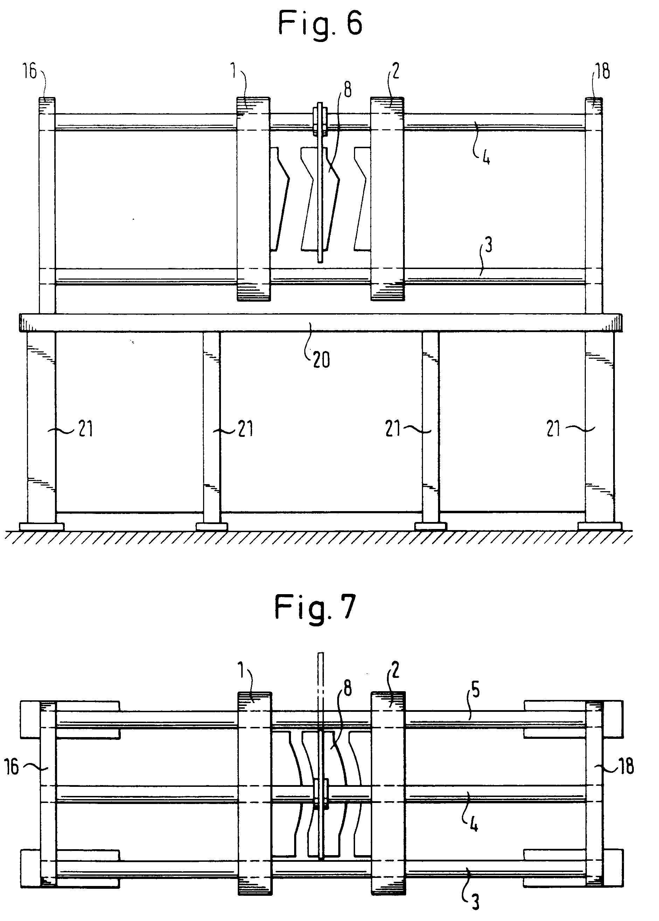

In den Figuren 6 und 7 ist eine weitere Ausführungsform dargestellt, bei der die Schweißmaschine liegend angeordnet ist. Die Säulen 3, 4, 5 sind in beidseitigen Endstücken 16, 18 gehalten, die an einem Untergestell 20 befestigt sind, das mit entsprechenden Gestellfüßen 21 auf dem Boden aufgestellt ist. In der oberen Etage erfolgt die Erwärmung und Verschweißung der zwischen den Pressenplatten 1 und 2 befindlichen Werkstücke und die Entnahme der Fertigteile erfolgt in der unteren Etage. In Figur 7 ist die Draufsicht auf die obere Etage gemäß Figur 6 dargestellt. Zwischen den Platten 1, 2 und den Endstücken 16, 18 befindet sich jeweils ein nicht dargestellter hydraulischer. Zylinder zum Antrieb der Pressenplatten längs den Säulen. Auch der Antrieb zum Schwenken des Schweißspiegels 8 ist nicht dargestellt.

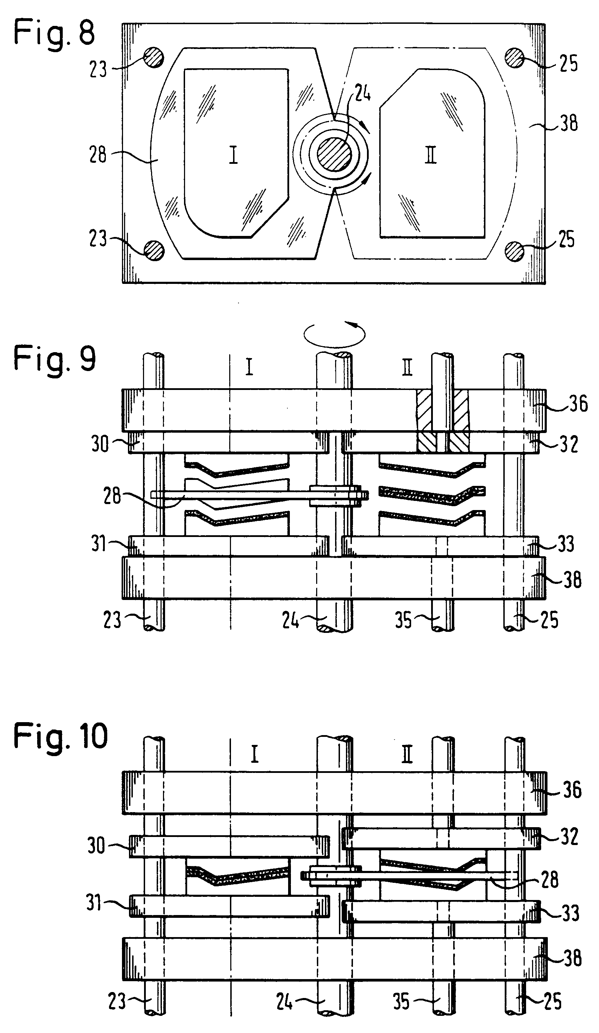

Das in den Figuren 8 bis 10 dargestellte Ausführungsbeispiel ist eine Schweißmaschine mit zwei Arbeitsstationen I und II. Dabei ist der um eine mittige Säule 24 drehbare Schweißspiegel 28 zwischen den beiden Stationen I und II hin- und herschwenkbar. Auf der Seite der Station I sind noch zwei Säulen 23 und auf der Seite der Station II zwei Säulen 25 feststehend angeordnet. Die Säulen 23 und die Säule 24 sind zum Führen und Verschieben der Platten 30, 31 für die Station I und die Säule 24 mit den Säulen 25 ist zum Führen der Platten 32 und 33 für die Station II vorgesehen. Die Platten 30 bis 33 sind jeweils über Längsantriebe, von denen ein Antrieb 35 in Figur 9 dargestellt ist, verschiebbar an einer gemeinsamen Platte 36 bzw. 38 angeordnet, die in den Säulen 23, 24 und 25 gehalten und geführt sind. Die Platten 30 bis 33 tragen die Aufnahmevorrichtungen für die zu verschweißenden Werkstücke. Die getrennten Antriebe für die Stationen I und II sind deshalb erforderlich, weil die Verschiebewege in den beiden Stationen jeweils unterschiedlich sind, abhängig davon, ob in der jeweiligen Station der Schweißspiegel eingefahren ist, um die aufgenommenen Werkstücke zu erwärmen, oder ob in der Station die Verschweißung der erhitzten Werkstücke erfolgt.

In Figur 9 sind die Platten 30, 31 bzw. 32, 33 in der geöffneten Stellung der Schweißmaschine, so daß in der Station I der Schweißspiegel eingefahren werden kann, während in der Station II das Fertigteil entnehmbar ist und die nächsten Werkstücke eingelegt werden. In Figur 10 ist der Schweißspiegel in die Station II geschwenkt und sind die Plattenpaare zusammengeschoben, so daß in der Station I die Verschweißung der vorher erwärmten Werkstücke erfolgt und in der Station II die eingelegten Werkstücke angewärmt werden.

Die Platten 36 und 38, welche die Pressenplatten 30 bis 33 tragen, sind ebenfalls längs der Säulen 23 bis 25 verschiebbar, um beispielsweise zum Auswechseln der Werkstückaufnahmen die Maschine vollständig zu öffnen oder je Mechanisierungsgrad der Maschine im Prozeßablauf Schnellbewegungen zu berücksichtigen. Die Säulen 23 bis 25 sind an nicht dargestellten Endstücken, beispielsweise in der Bauweise gemäß Figuren 6 und 7 gehalten.

## Patentansprüche

1. Schweißmaschine mit einem Rahmengestell und zwei Pressenplatten (1, 2; 30-33) zur Aufnahme der zu verschweißenden Werkstücke, Säulen und mindestens einem Antriebszylinder zum Verschieben mindestens einer Pressenplatte und mit einem beheizbaren Heizspiegel (8; 28), dadurch gekennzeichnet, daß die Säulen (3-5; 14,15; 23-25) das Rahmengestell durchlaufen und an den Enden miteinander verbunden sind, die Pressenplatten (1, 2, 30-33) an den Säulen geführt sind und der Heizspiegel (8; 28) von einer der Säulen aufgenommen wird und um diese Säule zwischen die Werkstücke schwenkbar ist.

2. Schweißmaschine nach Anspruch 1, dadurch **gekennzeichnet,** daß das Rahmengestell zwei Säulen (14, 15) aufweist, die an zwei benachbarten Ecken, schräg gegenüberliegenden Ecken oder aneinander gegenüberliegenden Seiten der Platten (1, 2) angeordnet sind und der Schweißspiegel von einer an einer Seite der Pressenplatten angeordneten Säule aufgenommen und um diese schwenkbar ist.

3. Schweißmaschine nach Anspruch 1, dadurch **gekennzeichnet,** daß das Rahmengestell im Dreieck angeordnete Säulen (3 bis 5) aufweist und der Schweißspiegel (8) um die an einer Seite der Pressenplatten angeordnete Säule (4) schwenkbar ist.

4. Schweißmaschine nach einem der Ansprüche 1 bis 3, dadurch **gekennzeichnet,** daß der Heizspiegel (8) um die Säule (4, 14, 24) in beiden Richtungen schwenkbar ist.

5. Schweißmaschine nach einem der Ansprüche 1 bis 4, dadurch **gekennzeichnet,** daß der Heizspiegel in einen Warmhalteköcher oder Werkstückaufnahmestation einschwenkbar ist.

6. Schweißmaschine nach einem der Ansprüche 1 bis 5, dadurch **gekennzeichnet,** daß beide Pressenplatten (1, 2; 30, 31; 32, 33; 36, 38) verschiebbar angetrieben sind.

7. Schweißmaschine nach einem der Ansprüche 1 bis 5, dadurch **gekennzeichnet,** daß eine Platte wahlweise fest oder verschiebbar angeordnet ist.

8. Schweißmaschine nach Anspruch 1, dadurch **gekennzeichnet,** daß zur Bildung zweier Arbeitsstationen zwei Plattenpaare (30, 31; 32, 33) nebeneinander an Säulen (23 bis 25) verschiebbar sind und der Schweißspiegel um eine zwischen den Plattenpaaren angeordnete mittlere Säule (24) drehbar ist, wobei der Schweißspiegel abwechselnd zwischen den beiden Stationen drehbar angetrieben ist.

9. Schweißmaschine nach Anspruch 8, dadurch **gekennzeichnet,** daß die Plattenpaare (30, 31; 32, 33) jeweils durch einen eigenen Antrieb (35) verschiebbar und an den Säulen geführt sind.

10. Schweißmaschine nach Anspruch 8 oder 9, dadurch **gekennzeichnet,** daß die Plattenpaare (30, 31; 32, 33) paarweise an gemeinsamen Platten (36, 38) angeordnet sind und die Antriebe (35) zwischen den gemeinsamen Platten und wenigstens einem Plattenpaar (32, 33) vorgesehen sind.

11. Schweißmaschine nach Anspruch 10, dadurch **gekennzeichnet,** daß die Platten (36, 38) an den Säulen (23 bis 25) geführt und verschiebbar angetrieben sind.

## Claims

1. A welding machine comprising a support frame and a pair of press plates (1,2; 30-33) for mounting the workpieces to be welded, a number of pillars and at least an actuating cylinder for moving at least one of said press plates, and comprising a heating mirror (8;28) to be heated, characterized in that said pillars (3-9; 14,15; 23-25) extending through said support frame are secured together at their respective ends, that the press plates (1,2; 30-33) are guided along said pillars and that said heating mirror (8;28) is mounted about one of said pillars being pivotable about said pillar inbetween said workpieces.

2. The welding machine of claim 1, characterized in that the support frame includes two pillars (14,15) which are located at two adjacent corners, two diagonally opposed corners or two sides of the plates (1,2) opposing each other and that the heating mirror is mounted on a pillar located at one side of the press plate, said heating mirror being pivoted about said pillar.

3. The welding machine of claim 1, characterized in that the support frame includes pillars (3-9) triangularly located and that the heating mirror is pivotable about a pillar which is located at one side of said press plates.

4. The welding machine of one of claims 1 to 3, characterized in that the heating mirror (8) is pivotable about a pillar (4,14,24) towards both directions.

5. The welding machine of one of claims 1 to 4, characterized in that the heating mirror is pivotable into a heat preserving pocket or workpiece receiving station.

6. The welding machine of one of claims 1 to 5, characterized in that both press plates (1,2; 30,31; 32,33; 36,38) are slidably driven.

7. The welding machine of one of claims 1 to 5, characterized in that a plate is selectively provided to be fixed or to be slidable.

8. The welding machine of claim 1, characterized in that two pairs of plates (30,31; 32,33) are slidably provided side-by-side along pillars (23-25) for defining a pair of working stations and that the welding mirror is rotatable about a central pillar (24) provided inbetween said pairs of plates, wherein the welding mirror is rotatably driven to alternate between said both stations.

9. The welding machine of claim 8, characterized in that the pairs of plates (30,31; 32,33) each are slidably driven via an individual drive means (35), and are guided along said pillars.

10. The welding machine of claim 8 or 9, characterized in that the pairs of plates (30,31; 32,33) are provided in pairs on common plates (36,38) and that said drive means (35) are provided between said common plates and at least a pair of plates (32,33).

11. The welding machine of claim 10, characterized in that said plates (36,38) are guided along said pillars (23-25) and are slidably driven.

## Revendications

1. Machine à souder comportant un châssis et deux plaques de serrage (1, 2 ; 30-33) destinés à recevoir les pièces à souder, des colonnes et au moins un verin d'entraînement pour faire coulisser au moins une plaque de serrage, et comportant un miroir de soudage chauffable (8; 28), caractérisé en ce que les colonnes (3-5 ; 14, 15 ; 23-25) traversent le châssis et sont reliées l'une à l'autre à leurs extrémités, que les plaques de serrage (1, 2; 30-33) sont guidées par les colonnes et que le miroir de soudage, (8 ; 28) est porté par une des colonnes et peut pivoter autour de cette colonne entre les pièces à souder.

2. Machine à souder selon la revendication 1, caractérisé en ce que le châssis comporte deux colonnes (14, 15) qui sont disposées dans deux angles contigus, dans des angles opposés en diagonale ou sur des côtés des plaques (1, 2) opposés l'un à l'autre, et que le miroir de soudage est porté par une colonne disposée sur un des côtés des plaques de serrage et peut pivoter autour de celle-ci.

3. Machine à souder selon la revendication 1, caractérisé en ce que le châssis comporte des colonnes (3 à 5) disposées en triangle et que le miroir de soudage (8) peut pivoter autour de la colonne (4) disposée sur un côté des plaques de serrage.

4. Machine à souder selon l'une des revendication 1 à 3, caractérisé en ce que le miroir de soudage (8) peut pivoter dans les deux sens autour de la colonne (4, 14, 24).

5. Machine à souder selon l'une des revendications 1 à 4, caractérisé en ce que le miroir de soudage peut pivoter dans un étui de maintien en température ou un poste de réception de pièces.

6. Machine à souder selon l'une des revendication 1 à 5, caractérisé en ce que les deux plaques de serrage (1, 2 ; 30, 31 ; 32, 33 ; 36, 38) sont entrainées de manière coulissante.

7. Machine à souder selon l'une des revendications 1 à 5, caractérisé en ce qu'une plaque est disposée au choix de manière fixe ou coulissante.

8. Machine à souder selon la revendication 1, caractérisé en ce que, pour la formation de deux postes de travail, deux paires de plaques (30, 31 ; 32, 33) peuvent coulisser l'une à côté de l'autre le long des colonnes (23 à 25) et que le miroir de soudage peut tourner autour d'une colonne (24) centrale disposée entre les paires de plaques, le miroir de soudage étant entraîné à pivoter alternativement entre les deux stations.

9. Machine à souder selon la revendication 8, caractérisé en ce que chaque paire de plaques (30, 31 ; 32, 33) peut coulisser en étant guidée pour les colonnes par un mécanisme d'entraînement propre (35).

10. Machine à souder selon la revendication 8 ou 9, caractérisé en ce que les paires de plaques (30, 31 ; 32, 33) sont disposées par paires sur des plaques communes (36, 38) et que les mécanismes d'entraînement (35) sont prévus entre les plaques communes et au moins une paire de plaques (32, 33).

11. Machine à souder selon la revendication 10, caractérisé en ce que les plaques (36, 38) sont guidées par les colonnes (23 à 25) et entrainées de manière coulissante.
